Europäisches Patentamt

European Patent Office

Office européen des brevets

(11) Publication number: **0 472 125 A2**

## EUROPEAN PATENT APPLICATION

(21) Application number: **91113773.5**

(51) Int. Cl.5: **G06F 3/16**

(22) Date of filing: **16.08.91**

(30) Priority: **20.08.90 US 569677**

(43) Date of publication of application:
**26.02.92 Bulletin 92/09**

(84) Designated Contracting States:
**DE FR GB IT NL SE**

(71) Applicant: **TEXAS INSTRUMENTS
INCORPORATED**
**13500 North Central Expressway**
**Dallas Texas 75265(US)**

(72) Inventor: **Einhorn, Kenneth H.J.**
**12325 Los Indios Trail, Apt. No. 5**
**Austin, TX 78729(US)**
Inventor: **Stewart, Jay D.**
**3211 Valley Pike**
**Cedar Park, TX 78613(US)**

(74) Representative: **Schwepfinger, Karl-Heinz,
Dipl.-Ing. et al**
**Prinz, Leiser, Bunke & Partner Manzingerweg
7**
**W-8000 München 60(DE)**

(54) **Voice services system.**

(57) A digital signal processor (32) having an associated memory (34) executes a program interpreter which interprets program routines stored in a program storage area of the memory (34). The program routines are portions of a larger application program. The program routines are downloaded via control of a CPU which stores a library of program routines in its associated program memory.

FIG. 3

RELATED APPLICATIONS

This patent application is related to U. S. Patent Application Serial No. 596,676, entitled "Method and Apparatus for Programming a Voice Services System", by Einhorn et al., filed August 20, 1990, and U. S. Patent Application Serial No. 570,171, entitled "Digital Signal Processing Control Method and Apparatus", by Einhorn et al., filed August 20, 1990.

TECHNICAL FIELD OF THE DISCLOSURE

This invention relates in general to electronic circuits, and particularly to a voice services system.

BACKGROUND OF THE DISCLOSURE

Voice communications have become an important factor in increasing the productivity of modern day business concerns. Newly developed voice communications systems, including voice messaging and call delivery systems, have resulted in the efficient transfer of information and reduced needless paperwork. These systems have expanded greatly in scope, providing more services and increasing number of users. As the number of services and users has increased, the complexity of providing these services in real-time has similarly increased.

A voice services system must be able to perform certain functions. First, the voice services system must interact with the telephone system, being able to produce the proper signals to interface with the telecommunications network to which it is attached. Second, it must maintain many databases related to its users and services. For example, billing information, user profiles and voice messages must all be maintained. Third, an interface to the user must be provided.

Many prior art voice services systems provide all necessary functions through a single processing unit. Since this type of system must provide all the processing necessary for the telephony control, interface, and database functions, it is possible that real-time telephony response may be sacrificed when many services are needed simultaneously. An alternative system uses a telephony control card to decode and encode DMTF and voice data. These products merely convert telephone data into rudimentary digital representations. The processing unit must further process the input and supply appropriate output. Hence, this system also results in much inefficiency and possible loss of real-time telephony response.

Therefore, a need has arisen for a voice services system which efficiently communications between a person on the telephone and a database management system.

SUMMARY OF THE DISCLOSURE

In accordance with the present invention, a voice services system is provided which substantially eliminates the problems associated with prior voice service devices.

The voice services system of the present invention provides a database management system and a telephony control section for generating signals to communicate with the telephone system. A service control section controls the telephone control system and communications with the database management system in order to provide services to the user of the voice services system.

The present invention provides significant technical advantages over the prior art. Since the service control section provides a control between the database management stem and the telephony control section, the resources of the database management system are relieved of the duty of interacting with the users of the system.

In another aspect of the present invention, the surface control section comprises communication circuitry coupled to the database management system and a processor operable to multitask a plurality of programs which may include session managers for interacting with an incoming call, an alarm program to detect error conditions, a resource manager to prioritize requests and an initialization program to initiate one or more of the associated programs.

This aspect of the invention provides significant functionalities for system and further provides a system which may be easily updated with new features.

BRIEF DESCRIPTION OF THE DRAWINGS

For a more complete understanding of the present invention, and the advantages thereof, reference is now made to the following descriptions taken in conjunction with the accompanying drawings, in which:

FIGURE 1 illustrates a block diagram of a voice services system employing the present invention;

FIGURE 2 illustrates a more detailed block diagram of the voice services system of FIGURE 1;

FIGURE 3 illustrates a block diagram of the voice processing board of the present invention;

FIGURE 4 illustrates the partitioning of the DSP memory;

FIGURE 5 illustrates a flow chart describing downloading of program routines to the digital signal processors; and

FIGURE 6 illustrates a functional block diagram of the service control section of the voice services system.

DETAILED DESCRIPTION OF THE DISCLOSURE

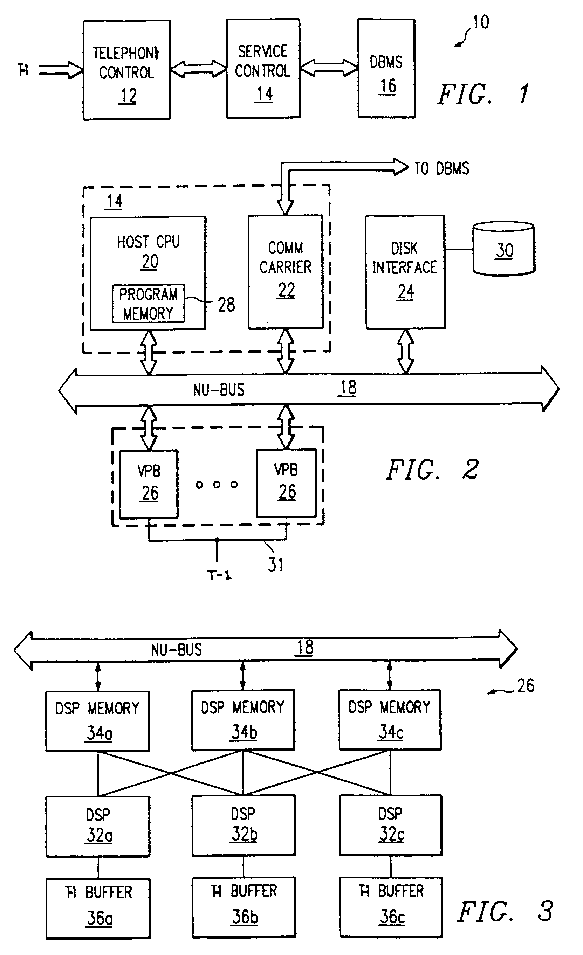

The preferred embodiment of the present invention is best understood by referring to FIGUREs 1-6 of the drawings, like numerals being used for like and corresponding parts of the various drawings.

FIGURE 1 illustrates a block diagram of the voice services system of the present invention.

The voice services system 10 comprises a telephony control section 12 connected to a T-1 line and a service control section 14 connected to the telephony control section 12 and a database management system (DBMS) 16. The voice services system may provide any number of services, such as voice messaging, call delivery, direct dialling and so on. It may include other features related to these services such as voice recognition and speaker verification.

In operation, the DBMS 16 is a mainframe computer which maintains customer records, billing information, voice data files, and other data related to the offered voice services requiring a larger database system such as voice templates for each customer used in speaker verification and speech data used in speaker independent speech recognition. The service control section 14 provides the interface between the database management system 16 and the users of the telecommunications system. For example, the service control section 14 oversees the voice messaging system. This would entail retrieving messages from the DBMS 16, prompting the caller for instructions, responding in accordance with the callers commands and so on. The telephony control section 12 interfaces with the T-1 line, performing the actual sending and receiving of voice data to the caller and managing the telecommunications protocols.

FIGURE 2 illustrates a more detailed block diagram of the preferred embodiment of the voice services system 10 of FIGURE 1. A bus 18, preferably conforming to the NU-BUS standard, is coupled to a CPU 20, a communications carrier 22, a disk interface 24, and a plurality of voice processing boards (VPB's) 26. The CPU 20 is coupled to a program memory 28. The disk interface is coupled to a hard disk 30, or other mass storage device. The VPBs 26 are also connected to the T-1 line via a T-1 bus 31. The communications carrier 22 is connected to the DBMS 16.

The VPBs 26 comprise the telephony control section 12. Each VPB 26 comprises a plurality of digital signal processors (DSPs), as illustrated in greater detail in connection with FIGURE 3. Each VPB board is preferably a multi-tasking system, such that each VPB 26 handles multiple channels on the T-1 line.

The CPU 20 preferably comprises a multiprocessor, for example, the Motorola 68030. The program memory 28 stores program routines and data parameters which are transferred to the VPBs 26 under control of the CPU 20. The CPU 20 also contains a local program memory (not shown) which provides instructions for the microprocessor.

The communications carrier 22 provides the communications functions to transfer information between the bus 18 to the DBMS 16. The disk interface 24 provides an interface between the bus 18 and a mass storage device, such as hard disk 30, primarily used for storing temporary data associated with the voice messaging services.

In operation, the CPU 20 transfers program routines and data parameters from the program memory 28 to the VPBs 26. The VPBs 26 execute the program routines downloaded by the CPU 20. When execution of the program routines is complete, the CPU 20 is notified via bus 18, and the CPU may download another program routine.

Each program routine may be thought of as a portion of an application program. By executing only a portion of an application program in the VPB 26, several advantages are evident. First, the program routines allow an execution of an application program which has memory requirements much greater than the local memories contained in the VPBs 26. Second, an application program may be dynamically adjusted during runtime by modifying the order of program routines transferred to the VPBs 26. Third, additional services and features may be added to the system 10 without interrupting its on-going operations.

FIGURE 3 illustrates a block diagram of a VPB 26. Each VPB 26 comprises a plurality of DSPs 32 (shown individually as DSP 32a-c). Each DSP 32a has a respective DSP memory 34a-c and a respective T-1 buffer 36a-c. The DSP memories 34a-c are cross-coupled between the DSPs 32a-c such that communication between the DSPs is possible. Circuitry for interfacing with the NU-BUS (not shown) may comprise a Texas Instruments TMS 320C25 integrated circuit.

In the preferred embodiment, the DSPs 32 comprise Texas Instruments TMS 320C30 digital signal processors. Each DSP memory 34 comprises a one megabyte memory arranged as 256k x 4 bytes (for a 32-bit word). The T-1 buffer comprises a Mitel MT8920 ST-bus parallel access circuit. The T-1 buffer translates waveforms generated by the DSPs to provide suitable signals to place on a T-1 line. Additional T-1 chips, such as the Mitel MT8980 and MT89760 are necessary to communicate with the T-1 line.

In operation, one DSP 32 is responsible for running the program routines downloaded by the CPU 26. The other DSPs are dedicated to particular functions. For example, one DSP may be dedicated to the speaker independent continuous digit recognition wherein a caller may speak the digits into the telephone receiver rather than enter digits using a keypad. Another dedicated function would be speaker verification wherein the caller is identified and verified through use of a spoken identification code. In speaker verification, the identification code is determined using the speaker independent continuous digit recognition, and a voice template is retrieved from the DBMS 16 corresponding to that identification code. The voice template is then compared to the actual spoken code to determine whether the caller is an authorized user.

While the preferred embodiment shows three DSPs and associated memories and T-1 buffers, more or less could be used depending upon the nature of the device in which the DSPs 32 are utilized.

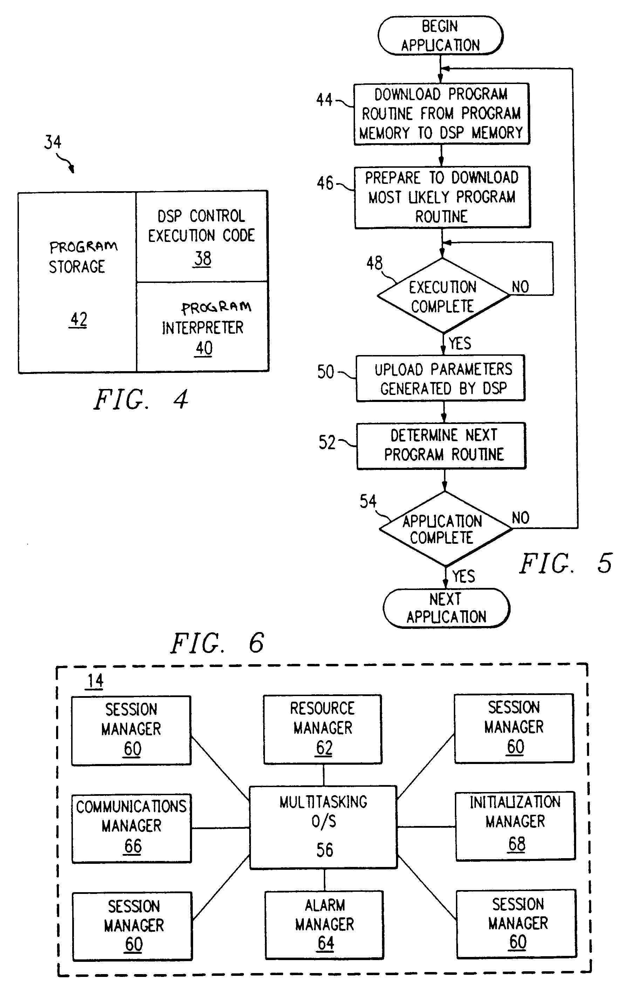

FIGURE 4 illustrates how the DSP memory 34 is used in connection with the DSP which is responsible for executing the program routines transferred by the CPU. The DSP memory 34 may be thought of as having three areas, a DSP control execution code section 38, a program interpreter section 40 and a program storage section 42. The program storage section 42 stores the program routines and parameter data transferred from the CPU 20 to the VPB 26. The program routines are preferably in a pseudo-code form. The program interpreter section 40 contains a code which interprets the pseudo-coded program routines in the program storage section 42. The DSP control execution code section 38 stores code not changed by the CPU 20. This code supports requests from the downloaded software, multitasking and T-1 and NU-BUS transfer protocols. For example, a pseudo-coded program routine downloaded into the program storage section 42 may contain a function "gentone (5)" which indicates a DTMF signal corresponding to keypad digit 5 is desired. The program interpreter interprets the instruction and accesses the appropriate the DSP control code to implement the appropriate DTMF signal.

The actual program language interpreted by the program interpreter will vary depending on the application. For the application of a telecommunication system described hereinabove, the following commands are supported:

## ARITHMETIC

| | |
|---|---|
| Arithmetic operations: | +, -, *, /, mod, = |
| | and '-' for unary minus. |
| Boolean operations: | and, or, xor, not |

## COMPARISONS

Comparisons are used in the "if-condition-then-statement" construct to evaluate to TRUE or FALSE. Both string and integer variables can be compared.

| | |
|---|---|
| Arithmetic comparisons: | =, !=, <, >, <=, >= |
| Boolean comparisons: | and, or, xor, not, eq. |

## FUNCTIONS

| | |
|---|---|
| ATOI (strexpr): | converts a string of digits to its numerical representation. |
| CHR (intexpr): | returns the ASCII character which corresponds to the number given. |
| ITOA (intexpr): | converts a number to the string which represents it. |
| LEN (strexpr): | returns the length of the input string. |
| VAL (strexpr): | returns the ASCII value of the first character in the string. |

## PROCEDURES

The following procedures, mostly relating to telecommunications operations, are supported.

4

| PROCEDURE | EXPLANATION |
|---|---|
| Answer_phone | Prepares the VPB to receive an incoming call and activates the on-hook detection routine once a call has been received. |
| Connect_lines | Connects an incoming and outgoing T-1 channel so the callers on the end of the line can talk to each other. |
| Gen_tone | Generates phone signals on the designated phone line. The signals may be DTMF tones, TOLLMF tones, or special tones such as beeps, warbles, bonds, etc. |
| Monitor | Listen to a phone channel and determine what is heard. |
| Play | Play the contents of a voice file. |
| Recognize | Speaker independent or speaker dependent (or both at the same time) recognition. Template update done on speaker dependent phrases. |
| Record | Record the sounds on the specified T-1 line into a digitized data file. |
| Recv_tone | Activates the task that detects tones on a phone channel. |
| Send_off_hook | Send an off-hook signal on the designated channel. This will accept an incoming call from the network switch. |
| Send_on_hook | This will terminate the use of a T-1 channel. It generates an on-hook signal to the network switch and closes and de-allocates the channel from the VPB. |

| Seize | Prepares the VPB to use an output T-1 channel. |
|---|---|
| Sicdr | Performs speaker independent continuous digit recognition. |
| Verify | The subscriber's voice (recorded or live) is verified against the stored template from the subscriber's profile. If the voice verifies successfully, the template will be updated. |
| Wait_off_hook | Waits for an off-hook to occur on the outgoing T-1 channel. The off-hook indicates that the network switch is prepared to receive the card number and the card ID for an outgoing call. Once the off-hook has been detected, the on-hook detection routine will be activated. |

FIGURE 5 illustrates a flow chart of the downloading process. In block 44, a program routine is downloaded from the program memory 28 to the DSP memory 34 corresponding to the desired DSP 32a-c. After downloading the first program routine, the CPU 20 may determine the most likely program routine to be downloaded next in sequence (block 46). The CPU then waits for the DSP 32 to complete execution of the program routine (decision block 48). Once the execution of the program routine is complete, the CPU uploads parameters generated by DSP (if any) during execution of the program routine (block 50). Based on the uploaded parameters, the CPU 20 determines the next program routine to executed by the DSP (block 52). If the application program has not been completed, the next program routine is downloaded (block 44).

FIGURE 6 shows a functional block diagram of the service control section 14. The service control section 14 provides a plurality of services managed by a multitasking operating system 56 executed by the CPU 20 which allows it to simultaneously execute a plurality of independent programs. Similar to program execution in the VPBs 26, the programs executed by the CPU 20 are in a pseudo-coded format and are executed in conjunction with a interpreter. This aspect of the invention allows the programs to be quickly and easily changed, and also allows portable programs to be developed.

For each incoming call, the CPU 20 executes a session manager program 60. Although four such session manager programs are shown, the number of session manager programs running simultaneously will depend upon the number of incoming calls to the system 10. The session manager program 60 provides the interaction with the caller. For example, upon receipt of the call, the session manager 60 will ask for the user's identification and will verify the supplied identification, preferably using speaker verification. To do so, the session manager 60 must retrieve data from the DBMS 16 for prompting the user for his or her identification, transfer the prompt data to the VPB 26 along with a program which instructs the VPB 26 to relay the prompt over the T-1 line. After the prompt is issued, the session manager 60 must provide the program to the VPB 26 which interprets the user's response. This may involve several program routines for recognizing the caller's speech and for verifying the speech against a voice template for the authorized user which is stored in the DBMS 16.

The session manager code is written in a pseudo-coded format which is interpreted by the CPU 20. Thus, the services offered by the voice services system 10 can be changed easily by modifying the pseudo-code. In the preferred embodiment, the session manager 60 comprises a plurality of smaller "presentation" programs. The variables associated with the session manager are preserved as presentation programs are shuffled in.

The service control section 14 also provides a resource processor 62 which resolves contention between the session managers 60. Since the session managers 60 run independently from one another, the resource processor 62 is necessary to prioritize the use of the VPBs 26 and the DBMS 16. The resource manager 62 is also implemented in the service control section 14 by the CPU 20 a multitasked program.

An alarm manager 64 is provided in the service control section 14, multitasked by the CPU 20. The alarm system 64 detects error states in the voice services system 10 and with the T-1 facilities and reports the errors to the DBMS 16, and to the system operator, if necessary.

A communication manager 66 oversees the communications between the service control section 14 and the DBMS 24 in conjunction with the communications carrier 22.

An initialization manager 68 starts the alarm manager 64 and communications manager 66 at start up of the voice services system 10. Furthermore, the initialization manager 68 initializes each VPB 26 at start up. For each incoming call, the initialization manager initiates a session manager 60.

Hence, the service control section 14 is constantly transferring data to and from the DBMS 16 and the telephony control section 12. In the prior art, the control provided by the service control section 14 would have been provided by the DBMS 16. Consequently, the resources of the DBMS would be severely strained. Further, the present invention allows the features of the voice services system to be updated without affecting operation of the DBMS 16.

The present invention provides several advantages over the prior art. The application program may be changed dynamically during runtime by the order of transfer of program routines from the program memory 28 to the VPBs 26. Since the CPU 20 transfers program routines and data into an area of the DSP memory 34 which is not executed by the DSP 32, but rather is executed through the DSP's execution of the script interpreter and the control code, an idle/reset routine is unnecessary, which circumvents the problems associated with prior art devices. Further, since pseudo-code is transferred, the code may be transportable to other platforms using different hardware by preparing a suitable script interpreter and control code for the digital signal processor involved.

Although the present invention has been described in detail, it should be understood that various changes, substitutions and alterations can be made herein without departing from the spirit and scope of the invention as defined by the appended claims.

## Claims

1.  A voice services system for interacting with a telephone system, comprising:
    a database management system;
    a telephony control section for generating signals to communicate with the telephone system;
    a service control section for controlling said telephony control system and communicating with said database management system.

2.  A voice services system for interacting with a telephone system, comprising:
    a database management system for storing information relating to the voice services system;
    a telephony control section for generating signals to communicate with the telephone system; and
    a service control section for controlling said telephony control system and communicating with said database management system, said service control section comprising communication circuitry coupled to said database management system and a processor operable to multitask a plurality of programs.

3.  The voice services system of Claims 1 or 2 wherein said service control section comprises a processor.

4.  The voice services system of Claim 3 wherein said service control section further comprises communication circuitry coupled to said database management system.

5.  The voice services system of Claims 1 or 2 wherein said processor is operable to multitask a plurality of programs.

6.  The voice services system of Claim 5 wherein one of said programs comprises a session manager to interact with an incoming call.

7.  The voice services system of Claim 5 wherein one of said programs comprises an alarm program to detect error conditions.

8.  The voice services system of Claim 7 wherein said alarm program is further operable to report detected errors to a system operator.

9. The voice services system of Claim 5 wherein one of said programs comprises a resource manager to prioritize requests from other of said plurality of programs.

10. The voice services system of Claim 5 wherein one of said programs comprises a initialization program to initiate one or more of the other of said plurality of programs.

11. The voice services system of Claim 10 wherein said initialization program is further operable to initialize said telephony control section.

FIG. 1

FIG. 2

FIG. 3

BEGIN APPLICATION

44 — DOWNLOAD PROGRAM ROUTINE FROM PROGRAM MEMORY TO DSP MEMORY

46 — PREPARE TO DOWNLOAD MOST LIKELY PROGRAM ROUTINE

48 — EXECUTION COMPLETE — NO

YES

50 — UPLOAD PARAMETERS GENERATED BY DSP

52 — DETERMINE NEXT PROGRAM ROUTINE

54 — APPLICATION COMPLETE — NO

YES

NEXT APPLICATION

*FIG. 5*

## FIG. 4

34

| PROGRAM STORAGE <br><br> 42 | DSP CONTROL EXECUTION CODE <br> 38 |
| | PROGRAM INTERPRETER <br> 40 |

*FIG. 4*

## FIG. 6

14

| SESSION MANAGER 60 | RESOURCE MANAGER 62 | SESSION MANAGER 60 |
| COMMUNICATIONS MANAGER 66 | MULTITASKING O/S 56 | INITIALIZATION MANAGER 68 |
| SESSION MANAGER 60 | ALARM MANAGER 64 | SESSION MANAGER 60 |